# FASCICULE DE BREVET EUROPEEN

(11) **EP 0 656 486 B1**
(45) Date de publication et mention de la délivrance du brevet: **29.12.1997**
(21) Numéro de dépôt: 94402547.7
(22) Date de dépôt: 10.11.1994
(51) Int. Cl.: F16F 13/00

(54) **Perfectionnement aux dispositifs antivibratoires hydrauliques**
Verbesserungen an hydraulischen Schwingungsdämpfern
Improvements to hydraulic anti-vibration devices

(30) Priorité: 02.12.1993 FR 9314458
(43) Date de publication de la demande: 07.06.1995
(73) Titulaire: HUTCHINSON, F-75008 Paris (FR)
(72) Inventeur: Gennesseaux, André, F-28200 Chateaudun (FR)
(74) Mandataire: Burbaud, Eric

(56) Documents cités:
- EP-A- 0 480 459
- EP-A- 0 547 287
- EP-A- 0 561 703
- EP-A- 0 575 250
- DE-A- 4 036 538
- FR-A- 2 692 639
- US-A- 5 246 212

## Description

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux dont la construction est généralement symétrique de révolution autour d'un axe vertical et qui comportent :
- une armature rigide annulaire et une tige rigide traversant cette armature, solidarisables respectivement avec les deux éléments rigides à réunir,
- un ressort annulaire en élastomère résistant à la compression axiale, reposant sur l'armature et interposé entre celle-ci et la tige, qui le traverse,
- une membrane supérieure flexible et étanche portée par l'armature et délimitant au moins avec une paroi annulaire flexible et étanche une enceinte disposée au-dessus du ressort,
- une cloison rigide intermédiaire portée par l'armature, s'étendant entre la membrane et la paroi annulaire et divisant l'intérieur de l'enceinte en deux chambres, l'une inférieure de travail du côté du ressort et l'autre de compensation,
- un passage étranglé faisant communiquer en permanence les deux chambres entre elles,
- une masse de liquide remplissant les deux chambres et le passage étranglé,
- un premier disque adhéré à la base de la paroi annulaire,
- et un second disque solidaire de la tête de la tige, disposé juste au-dessous du premier disque et reposant sur le ressort.

De tels dispositifs sont connus du EP-A-0 575 250 comme représentant l'état de la technique selon l'article 54(3) CBE.

Dans les modes de realisation, de ces dispositifs, qui ont été décrits dans ce document, l'ensemble du dispositif est soumis, lors de son montage, à une précontrainte axiale suffisante pour que les deux disques soient en permanence appliqués l'un contre l'autre selon la direction axiale tout en pouvant glisser librement l'un par rapport à l'autre selon les directions transversales.

Du fait de cette application permanente, les deux disques peuvent être considérés comme solidarisés l'un de l'autre selon la direction axiale et le dispositif fonctionne en permanence à la manière d'un support hydraulique.

En d'autres termes, l'application sur l'armature ou sur la tige, selon la direction axiale, d'oscillations de relativement grande amplitude (généralement supérieure à 0,5 mm) et de relativement basse fréquence (généralement de l'ordre de 5 à 20 Hz) -oscillations du genre de celles de "hachis" occasionnées par les cahots de la route lors du roulage du véhicule concerné-, ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées.

Cet amortissement est obtenu avec une raideur relativement élevée du dispositif.

Lorsque le dispositif est appelé à fonctionner à une fréquence supérieure à celles mentionnées ci-dessus, savoir à une fréquence de l'ordre de plusieurs dizaines de Hz ou même davantage, comme c'est le cas par exemple lorsque le moteur du véhicule fonctionne au ralenti à l'arrêt de ce véhicule, il convient de réduire la raideur du dispositif ainsi que son amortissement, le traitement des vibrations engendrées par le moteur relevant alors plutôt d'une isolation ou absorption que d'un amortissement.

Pour les fréquences relativement élevées indiquées, il serait tout à fait suffisant que l'élasticité du dispositif soit assurée par le seul ressort compris par ce dispositif ou, en d'autres termes, que la portion hydraulique du dispositif soit neutralisée.

L'invention a pour but, surtout, de rendre facile une telle neutralisation dès que la fréquence des oscillations à traiter dépasse un seuil prédéterminé.

A cet effet, les dispositifs antivibratoires du genre en question selon l'invention sont essentiellement caractérisés en ce qu'ils comprennent des moyens pour commander à volonté des écartements axiaux mutuels des deux disques et leurs remises en contact subséquentes.

Dans des modes de réalisations préférés, on a recours en outre à l'une et/ou à l'autre des dispositions suivantes :
- les moyens de commande agissent sur la position axiale du centre de la membrane,
- les moyens de commande sont actionnés électriquement,
- les moyens de commande mettent en oeuvre une dépression,
- dans un dispositif selon l'alinéa précédent pour lequel l'un des deux éléments rigides est un moteur de véhicule, la dépression est engendrée par le fonctionnement de ce moteur,
- la commande de l'écartement mutuel des deux disques est asservie au dépassement d'un seuil donné par la fréquence ou par l'amplitude des vibrations imposées à l'une des armatures.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation de l'invention en se référant au dessin ci-annexé d'une manière bien entendu non limitative.

Les figures 1 et 2, de ce dessin, montrent en coupe axiale un premier dispositif antivibratoire hydraulique établi selon l'invention, en respectivement ses deux états de fonctionnement à relativement basse fréquence (5-20 Hz) et à haute fréquence.

La figure 3 montre semblablement à la figure 1 mais en partie seulement et plus schématiquement, un second dispositif antivibratoire hydraulique conforme à l'invention.

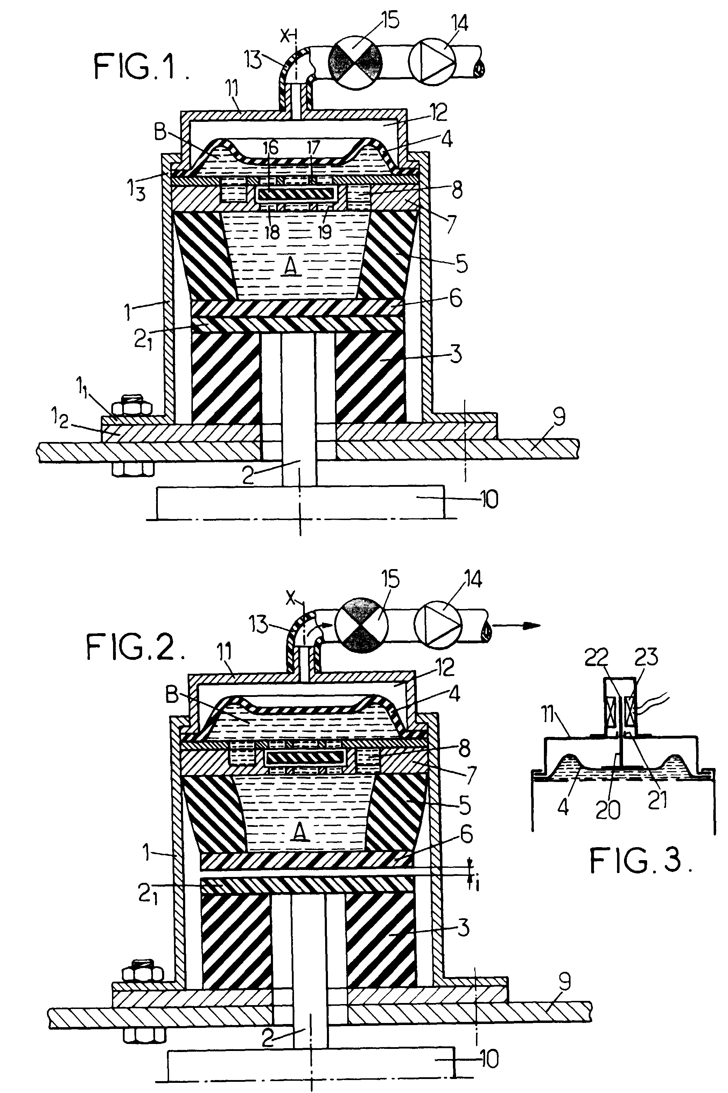

Le premier dispositif antivibratoire illustré, sur les figures 1 et 2, présente une forme générale symétrique de révolution autour d'un axe vertical X et comprend :
- une armature annulaire rigide 1 d'axe vertical X se présentant sous la forme générale d'un tronçon tubulaire dont l'extrémité inférieure est prolongée radialement vers l'extérieur par une embase annulaire 1₁,
- une tige rigide centrale 2 d'axe X,
- un ressort annulaire en élastomère 3 reposant sur une plaque perforée 1₂ qui est soudée sous l'embase 1₁, ressort interposé verticalement entre ladite plaque et un disque rigide 2₁ solidarisé avec la tête de la tige 2,
- une membrane flexible et étanche 4 supérieure et une paroi annulaire élastique et étanche 5 inférieure fermée à sa base par un disque rigide 6, montées toutes les deux de façon étanche sur l'armature 1, à l'intérieur de la portion supérieure de celle-ci, de manière à former ensemble une enceinte annulaire étanche,
- une cloison intermédiaire rigide 7 portée par l'armature 1, s'étendant entre la membrane 4 et la paroi 5 et divisant l'intérieur de l'enceinte annulaire en deux chambres annulaires, l'une inférieure A, de travail, et l'autre supérieure B, de compensation,
- un passage étranglé 8 évidé dans la cloison 7 et reliant en permanence les deux chambres A et B,
- et une masse de liquide remplissant les deux chambres A et B et le passage étranglé 8.

On voit également sur le dessin que les bords adjacents de la membrane 4, du soufflet 5 et de la cloison intermédiaire 6, sont sertis les uns sur les autres dans un anneau 1₃ constituant la portion supérieure de l'armature 1.

L'armature 1 et la tige 2 sont solidarisées respectivement avec les deux pièces entre lesquelles on désire réduire ou éviter le transfert de vibrations ou oscillations : dans les modes de réalisation préférés, l'armature 1 est montée sur la carrosserie 9 d'un véhicule et la tige 2, sur le moteur 10 de ce véhicule, alors suspendu inférieurement.

L'ensemble est soumis, lors de son montage, à une précontrainte axiale suffisante pour que les deux disques 2₁ et 6 soient en permanence appliqués l'un contre l'autre selon la direction de l'axe X tout en pouvant glisser librement l'un par rapport à l'autre selon les directions transversales.

Ces deux disques sont constitués, au moins au niveau de leurs surfaces en contact mutuel, en un matériau présentant une bonne résistance à l'usure et un coefficient de frottement qui est, ou bien faible pour faciliter les glissements transversaux relatifs, ou bien élevé pour au contraire empêcher de tels glissements.

Dans le premier cas, ledit matériau est avantageusement une polyamide chargée de fibres de verre et, de préférence en outre, de bisulfure de molybdène. Dans le second cas, le matériau en question peut être à base de caoutchouc.

En outre, on coiffe la membrane supérieure 4 par un couvercle ou capot 11 à bords rabattus vers le bas de façon à former avec cette membrane un boîtier étanche 12 : à cet effet, les extrémités inférieures desdits bords, elles-mêmes repliées vers l'extérieur, sont serties avec les bords de pièces adjacentes ci-dessus mentionnés à l'intérieur de l'anneau 1₃.

On relie l'intérieur du boîtier 12, par un tuyau 13, avec l'une 14 des sources de dépression disponibles sur le moteur 10 en fonctionnement, à travers une vanne 15.

Cette vanne 15, qui fonctionne en tout ou rien, peut être :
- manuelle, et alors commandable par un organe facilement accessible du conducteur du véhicule,
- ou automatique, et par exemple asservie au dépassement d'un seuil donné par la fréquence des oscillations engendrées sur l'un des éléments 9 et 10.

Le fonctionnement du dispositif ci-dessus décrit est le suivant.

Tant que la vanne 15 est fermée et que par conséquent aucune dépression n'est appliquée par le tuyau 13 dans le boîtier 12, les deux disques 2₁ et 6 demeurent fermement appliqués axialement l'un contre l'autre du fait de la précontrainte de montage et le dispositif fonctionne à la façon des dispositifs hydrauliques habituels : les oscillations axiales relatives du moteur 10 par rapport à la caisse 9, c'est-à-dire de la tige 2 par rapport à l'armature 1 et plus précisément encore du disque 2₁ par rapport à la cloison rigide 7, se traduisent par des va-et-vient de liquide entre les deux chambres A et B à travers le passage étranglé 8 et, pour une valeur donnée de la fréquence desdites oscillations, la colonne de liquide présente dans le canal 8 entre en résonance, ce qui assure un excellent amortissement des oscillations concernées.

Dès ouverture de la vanne 15, l'application dans le boîtier 12 de la dépression provenant de la source 14 a pour effet de soulever la membrane 4, ce qui attire avec elle vers le haut la masse de liquide disposée dans l'ensemble des deux chambres A et B avec contraction axiale de la paroi 5 et soulèvement du disque 6.

Dès que l'amplitude de ce soulèvement dépasse l'amplitude de l'abaissement dudit disque 6 qui était dû à la précontrainte de montage initiale, on observe une séparation des deux disques 2₁ et 6, c'est-à-dire la création d'un jeu i (figure 2) entre ces deux disques.

Dès lors, la portion hydraulique du dispositif est entièrement portée par la seule armature 1 et donc totalement neutralisée : l'élasticité du support n'est plus due qu'à la présence du ressort 3.

Ce support présente alors une raideur faible avec amortissement nul, ce qui le rend tout à fait apte à l'isolation des vibrations de fréquence relativement élevée.

Pour passer du premier type de fonctionnement au second, il convient de commander la vanne 15 de façon telle que la dépression ne soit pas appliquée dans le boîtier 12 tant que la fréquence des oscillations à traiter demeure relativement basse, savoir inférieure à un seuil S prédéterminé, qui est par exemple de l'ordre de 20 à 25 Hz, et soit appliquée dès que ladite fréquence dépasse ce seuil.

Dans des modes de réalisation préférés, un tel passage peut être rendu automatique et asservi aux franchissements du seuil S par la fréquence des oscillations ou vibrations à traiter, fréquence alors détectée et mesurée en permanence par un capteur approprié.

Dans un mode de réalisation ayant donné toute satisfaction et mentionné à titre purement illustratif,
- la dépression appliquée dans le boîtier 12 lors du fonctionnement "haute fréquence" était de l'ordre de 800 millibars,
- le soulèvement global du disque 2₁ résultant de cette application était de l'ordre de 1,5 mm, ce qui correspondait à un jeu résultant i de l'ordre de 0,5 mm, l'abaissement des deux disques 2₁ et 6 accolés dû à la précontrainte de montage étant lui-même de l'ordre du millimètre.

Sur le dessin, on voit encore en 16 un "clapet" monté de façon à pouvoir vibrer avec une amplitude limitée -généralement inférieure à 1 mm- entre deux grilles 17 et 18 tendues à travers un orifice 19 évidé dans la cloison 7 et propre à faire communiquer entre elles les deux chambres A et B.

Comme on le sait, les vibrations de ce clapet 16, dit de "découplage haute fréquence", permettent d'absorber des vibrations de relativement faible amplitude et relativement haute fréquence, transmises entre les pièces 1 et 2.

Ce perfectionnement augmente les performances possibles du dispositif antivibratoire ci-dessus décrit.

Il permet en effet de choisir entre deux formules pour l'isolation des vibrations à relativement haute fréquence, savoir le recours à la dépression qui permet de neutraliser totalement la portion hydraulique du dispositif ou l'utilisation du clapet de découplage, laquelle implique une exploitation de la portion hydraulique et donc l'absence de recours à une dépression.

Dans la pratique, le critère adopté pour effectuer le choix entre ces deux formules est avantageusement l'amplitude des vibrations considérées :
- lorsque cette amplitude est relativement faible -ce qui correspond à un fonctionnement normal du moteur du véhicule- la mise en oeuvre du clapet 16 est tout à fait suffisante, une réduction de la raideur du support étant alors inutile,
- mais lorsque ladite amplitude dépasse un seuil donné -ce qui correspond en particulier au fonctionnement du moteur au ralenti à l'arrêt du véhicule- le clapet risque de venir en butée et il convient d'adopter la première formule, de neutralisation de la portion hydraulique.

La sélection correspondante peut être facilement obtenue en asservissant l'actionnement de la vanne 15 aux paramètres qui définissent ledit fonctionnement du moteur au ralenti à l'arrêt du véhicule, et en particulier à la levée de la pédale de l'accélérateur du véhicule.

Il est à noter que l'adoption de ce dernier critère est particulièrement bienvenue dans le cas présent, lorsque la dépression exploitée est celle qui règne juste en aval du papillon des gaz : c'est en effet pour le fonctionnement de ralenti indiqué que cette dépression est la plus forte.

Le second dispositif antivibratoire illustré sur la figure 3 diffère uniquement du premier par le fait que la commande des déplacements de la membrane 4, au lieu de faire appel à une dépression, est effectuée électriquement.

A cet effet, les dispositifs 13 à 15 des figures 1 à 2 sont ici supprimés et le centre de la membrane 4 est solidarisé, par l'intermédiaire d'une tige 20 traversant le centre du capot 11, dans un guide 21 approprié, au noyau 22 d'un électroaimant 23 monté sur ce capot 11.

Ainsi, l'ensemble de la tige 20 et de la membrane 4 est sollicité vers le haut quand l'électroaimant 23 est excité électriquement, ce qui écarte le disque 6 du disque 2₁.

Au contraire, lorsque l'électroaimant 23 n'est pas excité électriquement, ledit ensemble retombe, par simple gravité et/ou sous l'action d'un léger ressort de rappel approprié : les deux disques 6 et 2₁ sont alors de nouveau appliqués jointivement l'un contre l'autre.

L'ensemble est agencé de façon telle que les déplacements verticaux de la tige 20 soient, lorsque l'électroaimant 23 est désexcité, suffisamment libres pour ne pas perturber les déformations de "compensation" de la membrane 4.

Les excitations de l'électroaimant 23 se prêtent bien entendu aux mêmes asservissements que la commande de la vanne 15 ci-dessus.

En suite de quoi, et quel que soit le mode de réalisation adopté, on obtient finalement un dispositif dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où la portion hydraulique comprenant l'ensemble des éléments 4 à 8 ci-dessus décrits présenterait une configuration annulaire autour de l'axe X, ainsi que décrit dans le document EP-A-0 575 250 ci-dessus mentionné, le disque 6 étant alors réduit à une rondelle annulaire,
- celles où la symétrie de révolution du dispositif ne serait que partielle, la section horizontale de l'ensemble pouvant par exemple présenter la forme allongée de deux demi-cercles de diamètres identiques ouverts l'un vers l'autre et raccordés entre eux par deux tronçons de droite parallèles,
- et celles où les écartements des deux disques 2₁ et 6 seraient commandés par des moyens différents de ceux décrits ci-dessus, par exemple à l'aide d'un mécanisme à came rotative et levier actionnable électriquement et lié à une tige du genre de la tige 20 ci-dessus, cette liaison étant prévue avec un jeu tel que, lorsque le mécanisme n'est pas actionné, les déplacements de la membrane 4 soient suffisamment libres.

## Revendications

1. Dispositif antivibratoire hydraulique destiné à être interposé entre deux éléments rigides, présentant une construction symétrique de révolution autour d'un axe vertical (X) et comportant une armature rigide annulaire (1) et une tige rigide (2) traversant cette armature, solidarisables respectivement avec les deux éléments rigides à réunir (9,10), un ressort annulaire en élastomère (3) résistant à la compression axiale, reposant sur l'armature et interposé entre celle-ci et la tige, qui le traverse, une membrane supérieure flexible et étanche (4) portée par l'armature et délimitant au moins avec une paroi annulaire flexible et étanche (5) une enceinte disposée au-dessus du ressort, une cloison rigide intermédiaire (7) portée par l'armature, s'étendant entre la membrane et la paroi annulaire et divisant l'intérieur de l'enceinte en deux chambres, l'une inférieure de travail (A) du côté du ressort et l'autre de compensation (B), un passage étranglé (8) faisant communiquer en permanence les deux chambres entre elles, une masse de liquide remplissant les deux chambres et le passage étranglé, un premier disque (6) adhéré à la base de la paroi annulaire, un second disque (2₁) solidaire de la tête de la tige, disposé juste au-dessous du premier disque et reposant sur le ressort, et des moyens pour commander à volonté des écartements axiaux mutuels des deux disques (2₁,6) et leurs remises en contact subséquentes.

2. Dispositif antivibratoire selon la revendication 1, caractérisé en ce que les moyens de commande agissent sur la position axiale du centre de la membrane (4).

3. Dispositif antivibratoire selon l'une quelconque des revendications 1 et 2, caractérisé en ce que les moyens de commande (20-23) sont actionnés électriquement.

4. Dispositif antivibratoire selon l'une quelconque des revendications 1 et 2, caractérisé en ce que les moyens de commande (13-15) mettent en oeuvre une dépression.

5. Dispositif antivibratoire selon la revendication 4, pour lequel l'un des deux éléments rigides est un moteur du véhicule, caractérisé en ce que la dépression est engendrée par le fonctionnement de ce moteur et en ce que la mise en oeuvre de la dépression est asservie au fonctionnement du moteur au ralenti, à l'arrêt du véhicule.

6. Dispositif antivibratoire selon l'une quelconque des revendications 4 et 5, caractérisé en ce que les moyens de commande des déplacements relatifs axiaux des deux disques (2₁,6) comprennent : un couvercle (11) coiffant la membrane (4) de façon à former avec elle un boîtier étanche (12), une conduite (13) reliant l'intérieur de ce boîtier à une source de dépression (14), et une vanne (15) de commande montée sur cette conduite de façon à contrôler la liaison entre le boîtier et la source.

7. Dispositif antivibratoire selon l'une quelconque des précédentes revendications, caractérisé en ce qu'il comprend des moyens propres à détecter la fréquence des vibrations imposées à l'une des armatures et des moyens propres à asservir la commande de l'écartement mutuel des deux disques (2₁, 6) au dépassement d'un seuil donné par ladite fréquence.

8. Dispositif antivibratoire selon l'une quelconque des précédentes revendications, caractérisé en ce que la cloison intermédiaire (7) est percée d'un orifice (19) permettant de faire communiquer entre elles les deux chambres (A,B) et équipée d'un clapet ou membrane (16) dont les déplacements ou déformations ont une amplitude limitée, au plus égale à 1 mm.

9. Dispositif antivibratoire selon la revendication 8, caractérisé en ce qu'il comprend des moyens propres à détecter l'amplitude des vibrations imposées à l'une des armatures et des moyens propres à asservir la commande de l'écartement mutuel des deux disques (2₁,6) au dépassement d'un seuil donné par ladite amplitude.

10. Dispositif antivibratoire selon l'une quelconque des précédentes revendications, caractérisé en ce que sa portion hydraulique comprenant l'ensemble constitué par la membrane (4), la paroi (5), le disque (6) lié à cette paroi et la cloison intermédiaire (7) présente une configuration annulaire autour de l'axe (X), le disque (6) lié à la paroi étant alors réduit à une rondelle.

## Patentansprüche

1. Hydraulische Dämpfungsvorrichtung zum Einbau zwischen zwei starre Elemente, welche einen um eine vertikale Achse (X) rotationssymmetrischen Aufbau hat und einen festen ringförmigen Beschlag (1) und eine feste Stange (2), die diesen Beschlag durchdringt und jeweils mit den beiden zu verbindenden starren Elementen (9,10) fest verbunden ist, eine ringförmige Feder (3) aus einem Elastomer, welche der axialen Kompression entgegenwirkt und sich auf dem Beschlag abstützt und zwischen diesem und der Stange angeordnet ist, welche diesen durchdringt, eine obere flexible und dichte Membran (4), die von dem Beschlag getragen wird und wenigstens mit einer ringförmigen flexiblen und dichten Wand (5), die oberhalb der Feder angeordnet ist, einen geschlossenen Raum oberhalb der Feder begrenzt, eine feste Zwischenwand (7), die von dem Beschlag getragen wird und sich zwischen der Membran und der ringförmigen Wand erstreckt und das Innere des geschlossenen Raumes in zwei Kammern teilt, nämlich eine untere Arbeitskammer (A) an der Seite der Feder und eine andere Kompensationskammer (B), einen Innendurchtritt (8), welcher permanent die beiden Kammern untereinander kommunizieren läßt, eine die beiden Kammern und den engen Durchtritt füllende fluide Masse, eine erste Scheibe (6), die an die Basis der ringförmigen Wand angeklebt ist, eine zweite Scheibe (2₁), die fest am Kopf der Stange befestigt ist und gerade unterhalb der ersten Scheibe angeordnet ist und sich auf der Feder abstützt, und Mittel zur beliebigen Steuerung der axialen gegenseitigen Spreizungen der beiden Scheiben (2₁,6) und ihres aufeinanderfolgenden Inkontaktkommens aufweist.

2. Dämpfungsvorrichtung nach Anspruch 1,
dadurch gekennzeichnet,
daß die Steuerungsmittel auf die axiale Position des Zentrums der Membran (4) einwirken.

3. Dämpfungsvorrichtung nach irgendeinem der Ansprüche 1 und 2,
dadurch gekennzeichnet,
daß die Steuerungsmittel (20-23) elektrisch betätigbar sind.

4. Dämpfungsvorrichtung nach irgendeinem der Ansprüche 1 und 2,
dadurch gekennzeichnet,
daß die Steuerungsmittel (13-15) eine Depression verwenden.

5. Dämpfungsvorrichtung nach Anspruch 4, bei welcher einer der beiden starren Elemente ein Fahrzeugmotor ist,
dadurch gekennzeichnet,
daß die Depression durch die Funktion dieses Motors erzeugt wird und daß die Verwendung der Depression der Funktion des Motors im Leerlauf beim Stillstand des Fahrzeuges unterzogen wird.

6. Dämpfungsvorrichtung nach irgendeinem der Ansprüche 4 und 5,
dadurch gekennzeichnet,
daß die Steuerungsmittel zur relativen Axialverschiebung der beiden Scheiben (2₁,6) einen Deckel (11), der die Membran (4) derart abdeckt, um mit ihr ein dichtes Gehäuse (12) zu bilden, eine Leitung (13), die das Innere dieses Gehäuses mit einer Depressionsquelle (14) verbindet, und ein Steuerventil (15) aufweisen, das in dieser Leitung derart angeordnet ist, um die Verbindung zwischen dem Gehäuse und der Quelle zu steuern.

7. Dämpfungsvorrichtung nach irgendeinem der vorangehenden Ansprüche,
dadurch gekennzeichnet,
daß sie Mittel, die geeignet sind, die Frequenz der Schwingungen zu entdecken, welche auf einen der beiden Beschläge einwirkt, und Mittel aufweist, die geeignet sind, die Steuerung der gegenseitigen Spreizung der beiden Scheiben (2₁,6) einem Überschreiten eines gegebenen Schwellenwertes durch die besagte Frequenz zu unterziehen.

8. Dämpfungsvorrichtung nach irgendeinem der vorangehenden Ansprüche,
dadurch gekennzeichnet,
daß die Zwischenwand (7) durch ein Mundstück (19) durchdrungen ist, welches es erlaubt, zwischen sich die beiden Kammern (A,B) kommunizieren zu lassen, und mit einem Ventil oder einer Membran (16) ausgerüstet ist, deren Verschiebungen oder Deformationen eine begrenzte Amplitude höchstens gleich 1 mm haben.

9. Dämpfungsvorrichtung nach Anspruch 8,
dadurch gekennzeichnet,
daß diese Mittel, die geeignet sind, die Amplitude der Schwingungen zu entdecken, die auf einen der Beschläge einwirken, und Mittel aufweist, die geeignet sind, die Steuerung der gegenseitigen Spreizung der beiden Scheiben (2₁,6) einem Überschreiten eines gegebenen Grenzwertes durch die besagte Amplitude zu unterziehen.

10. Dämpfungsvorrichtung nach irgendeinem der vorangehenden Ansprüche,
dadurch gekennzeichnet,
daß ihr hydraulischer Bereich die Gesamtheit aufweist, die durch die Membran (4), die Wand (5), die Scheibe (6), die mit dieser Wand verbunden ist, und die Zwischenwand (7) gebildet ist, welche eine ringförmige Konfiguration um die Achse (X) aufweist, wobei die Scheibe (6), die mit der Wand verbunden ist, dann auf eine Unterlegscheibe reduziert ist.

## Claims

1. A hydraulic antivibration device designed to be interposed between two rigid elements, the structure of the device being circularly symmetrical about a vertical axis (X) and the device comprising: an annular rigid strength member (1) and a rigid rod (2) passing through said strength member, the strength member and the rod being suitable for being secured respectively to the two rigid elements that are to be united (9,10); an annular spring of elastomer (3) that withstands axial compression, resting against the strength member and the rod which passes through the spring; a leakproof flexible upper membrane (4) carried by the strength member and co-operating with at least one leakproof flexible annular wall (5) to define an enclosure disposed above the spring; an intermediate rigid partition (7) carried by the strength member, extending between the membrane and the annular wall and subdividing the inside of the enclosure into two chambers, a working bottom chamber (A) on the side of the spring, and a compensation chamber (B); a narrow passage (8) putting the two chambers permanently into communication with each other; a mass of liquid filling the two chambers and the narrow passage; a first disk (6) secured to the base of the annular wall; a second disk (2₁) secured to the head of the rod, the second disk being disposed immediately beneath the first disk and resting on the spring; and control means for causing at will the two disks (2₁,6) to move apart axially and subsequently to come back into contact.

2. An antivibratory device according to claim 1, characterized in that the control means are provided to axially displace the center of the membrane (4).

3. An antivibratory device according to any one of claims 1 and 2, characterized in that the control means (20-23) are electrically actuated.

4. An antivibratory device according to any one of the preceding claims, characterized in that the control means (13-15) bring a suction into play.

5. An antivibration device according to claim 4, in which one of the two rigid elements is a vehicle engine, characterized in that the suction is generated by operation of said engine, and in that application of the suction is servo-controlled to the engine idling while the vehicle is stationary.

6. An antivibration device according to any one of claims 4 and 5, characterized in that the means for controlling relative axial displacement of the two disks (2₁,6) comprise: a lid (11) covering the membrane (4) so as to co-operate therewith to form a gastight housing (12), a pipe connecting the inside of said housing to a source of suction (14), and a control valve (15) mounted on said pipe so as to control the connection between the housing and the source.

7. An antivibration device according to any one of the preceding claims, characterized in that it comprises means for detecting the frequency of the vibrations applied to one of the strength members and means for servo-controlling the mutual separation of the two disks (2₁,6) to the overpassing of a given threshold by said frequency.

8. An antivibration device according to any one of the preceding claims, characterized in that the intermediate partition is pierced by an orifice enabling the two chambers (A,B) to be put into communication with each other, and fitted with a valve member or membrane (16) whose displacements or deformations are of a limited amplitude that is at most equal to 1 mm.

9. An antivibration device according to claim 8, characterized in that it comprises means for detecting the amplitude of the vibrations applied to one of the strength members and means for servo-controlling the mutual separation of the two disks (2₁,6) to the overpassing of a given threshold by said amplitude.

10. An antivibration device according to any one of the preceding claims, characterized in that its hydraulic portion comprising the assembly constituted by the membrane (4), the wall (5), the disk (6) connected to said wall, and the intermediate partition (7) has an annular configuration about the axis (X), the disk connected to the wall then being in the form of a washer.
